# EUROPÄISCHE PATENTSCHRIFT

(11) **EP 2 870 304 B1**
(45) Veröffentlichungstag und Bekanntmachung des Hinweises auf die Patenterteilung: **28.08.2019**
(21) Anmeldenummer: 13741670.7
(22) Anmeldetag: 03.07.2013
(51) Int. Cl.: E04C 5/07

(54) **FASERVERSTÄRKTER MINERALISCHER BAUSTOFF**
FIBRE-REINFORCED MINERAL BUILDING MATERIAL
MATÉRIAU DE CONSTRUCTION MINÉRAL RENFORCÉ DE FIBRES

(30) Priorität: 06.07.2012 DE 102012106083
(43) Veröffentlichungstag der Anmeldung: 13.05.2015
(73) Patentinhaber: Karlsruher Institut für Technologie (KIT), 76131 Karlsruhe (DE)
(72) Erfinder: STEMPNIEWSKI, Lothar, 76275 Ettlingen-Oberweier (DE); URBAN, Moritz, 76857 Albersweiler (DE)
(86) Internationale Anmeldenummer: PCT/EP2013/001961
(87) Internationale Veröffentlichungsnummer: WO 2014/005710

(56) Entgegenhaltungen:
- WO-A-03/025305
- CN-Y- 201 236 420
- GB-A- 592 890
- US-A- 3 579 409
- US-A- 4 648 224
- US-A- 4 910 076
- US-A1- 2008 248 302

## Beschreibung

Die Erfindung betrifft einen langfaserverstärkten mineralischen Baustoff gemäß dem ersten Patentanspruch.

Mineralische Baustoffe enthalten z.B Zement, Kalk, Gips oder Ton als wesentliche Komponente und wurden in der Regel durch Zuschlagstoffe wie Kies z.B. bei Beton oder Sand z.B. bei Mörteln oder Putz modifiziert. Sie können aber auch aus natürlichen geologischen Bestandteilen bestehen, wie z.B. Erde.

Mineralische Baustoffe zeichnen sich durch eine hohe Druckfestigkeit aus, sind nur moderat Zugfest und zeigen dabei eine ausgeprägte Sprödigkeit. Eine hohe Zugfestigkeit und eine Plastizität von ausgehärteten mineralischen Baustoffen sind bei Gebäuden dann wesentlich, wenn diese beispielsweise durch Erdbewegungen wie Erdrutsche oder Erdbeben ungleichförmig und stoßweise belastet werden. Es wird daher angestrebt, Mauerwerke und Mineralische Baustoffe wie insbesondere Betonbauteile, Mörtelschichten und Erde so zu verstärken, dass eine Zugbelastung aufgenommen werden kann.

Bei Betonbauteilen ist es allgemein bekannt, deren Zugfestigkeit und deren Zähigkeit bei Brüchen durch eine Stahlarmierung zu erhöhen.

Auch sind in verschiedenen Kulturen natürliche und künstliche Putzsysteme bekannt, die durch bevorzugt natürliche in den Putz eingearbeitete Fasermaterialien verstärkt werden.

Auch mineralische Baustoffe mit künstlichen Verstärkungssystemen sind grundsätzlich bekannt.

Als Erzeugnisse hierfür stehen verschiedene Armierungskonzepte mit den folgenden Verstärkungselementen, die auf Fasern basieren, zur Auswahl. Als Fasern eignen sich insbesondere E-Glasfasern, AR-Glasfasern, Aramidfasern, Kohlenstofffasern, Basaltfasern, Naturfasern und Kunststoffasern.

Einzelfasern mit einem Durchmesser von typischerweise zwischen 5 bis 27 µm werden gebündelt mit (Garne) oder ohne Drillung (Rovinge) zu Faserprodukten weiterverarbeitet. Mit diesen Garnen oder Rovinge werden Vliese, Matten, Geflechte, Gelege, Laminate, Gewebe oder Gestricke/Gewirke hergestellt.

Vliese sind sehr leichte ca. 20 - 50 g/m² schwere nicht verwebte Gebilde aus Glas- oder Thermoplastfasern und mehr geeignet für die Verhinderung von feinen Rissen oder dem Verstärken von Feinschichten.

Matten sind mit Gewichten von ca. 100 - 1.500 g/m² sehr hochfeste Strukturen und werden im Besonderen als Geotextilien eingesetzt. Sie sind sehr steif und dadurch schlecht verarbeitungsfähig. Ähnliches gilt für die Laminate.

Gewebe bestehen aus sich kreuzenden Kett- und Schussfäden und bieten eine bidirektionale Verstärkungsmöglichkeit. Durch die wellig verlaufenden Fäden werden die mechanischen Eigenschaften negativ beeinflusst. Um diesen Effekt zu minimieren können nicht verdrillte breite Rovinge eingesetzt werden, die die Welligkeit und den Biegeradius minimieren. Als Nebeneffekt erhält man dadurch ein wesentlich dünneres besser verformbares Gewebe. Des Weiteren begünstigt diese Form die Imprägnierungsmöglichkeit, da im Vergleich zu runden Querschnitten bei gleicher Querschnittsfläche die Eindringung leichter ist. Nachteilig wirkt sich die Durchdringung mit gröberem Matrixmaterial aus.

Gewirke und Gelege sind die Produkte mit der größten Variationsvielfalt und Flexibilität in der Ausführung. Durch übereinanderlegen von verschiedenen Fasermaterialien in verschiedenen Orientierungen ist es möglich sogenannte hybride multidirektionale Gewirke herzustellen. Dadurch kann man die Festigkeit des Flächengebildes in nahezu alle Richtungen festlegen. Die Kreuzungen der Fasern können durch Imprägnierungen oder mit feinen Garnen fixiert werden und sind dadurch sehr beweglich und gut verarbeitbar.

Beispielsweise offenbart DE 10 2008 026 615 A1 eine hybride textile Bewehrung eines Mauerwerks. Die Bewehrung besteht dabei vorzugsweise aus gebündelten hochdehnbaren Fasersträngen, die in zwei Ausrichtungen orientiert als Matte in den einen mineralisch gebundenen Werkstoff eingelegt werden.

DE 699 29 540 T2 offenbart ein ähnliches System, bei dem jedoch die Fasern optional zur Verbesserung der Betonbindefestigkeit und zur Verbesserung der Widerstandsfähigkeit gegen Herausziehen beschichtet sind.

In der US 4.910.076 ist wird zudem eine Zementmörtelmatrix beschrieben, in die eine Harzimprägnierte Fasermatte eingebunden ist. Optional wird vorgeschlagen, auf die ausgehärtete Harzimprägnierung Sand aufzubringen.

Auch US 3.579.409 und WO 03/025305 A1 offenbaren beschichtete Fasern für Baustoffe, bei der ebenso Sand auf die Beschichtung aufgebracht wird. Die WO 03/025305 offenbart des weiteren die Merkmale der einleitenden Teile der Ansprüche 1 und 10.

Aus der WO 95/34724 sind zudem Systeme bekannt, bei denen eine Putzschicht zudem mit zusätzlichen Zugankern mit dem darunter liegenden Mauerwerk verdübelt ist.

Ferner ist aus der US 2008/248302 A1 ein faserverstärkter mineralischer Baustoff bekannt, umfassend eine Faser, die in den mineralischen Baustoff eingebettet ist, mindestens eine duktile oder elastische Beschichtung auf der Faser sowie in die Beschichtung eingebundene Partikel.

GB 592890 offenbart einen mineralischen Baustoff mit einer beschichteten Faser mit stoffschlüssig angebundenen Partikeln. Die Partikel ragen aus der Oberfläche der Beschichtung hervor und können eine substantiell größer sein als der Faserdurchmesser.

Auch US 4.648.224 beschreibt einen mineralischen Baustoff mit einer beschichteten Faser mit stoffschlüssig angebundenen Partikeln, welche auch die Dicke der Beschichtung übersteigen.

Ferner offenbart CN 2012 36420 Y eine Faser zur Verstärkung von Beton. Beschrieben werden dabei neben unbeschichteter Faserbereiche auch Faserbeschichtungen ohne und mit eingebundenen Partikeln.

Allen vorgenannten Armierungssystemen gemein sind eine Armierung mit oder ohne Beschichtung, die in einer Matrix aus einem Zementmaterial eingebettet sind. Damit erhöht sich nicht nur die System-Zugfestigkeit des Bauteils, sondern auch Sicherheit gegenüber herausbrechender Teile der Matrix. Flächige Putzschichten werden zudem nicht nur durch die Armierung gegen ein Abplatzen unterstützt, sondern stützen insbesondere bei Erdbewegungen das darunter liegende Mauerwerk, indem sie durch eine zusammenhängend flächige Anbindung entstehende Risse überbrücken und damit das Mauerwerk stabilisieren.

Davon ausgehend liegt die **Aufgabe der Erfindung** darin, einen faserverstärkten mineralischen Baustoff vorzuschlagen, der sich durch eine weiter erhöhte Tragfähigkeit und Duktiliät auszeichnet und dabei insbesondere bei einem Einsatz als Armierung eingebunden in einer Matrix aus einem Mörtel oder einer anderem Baustoff bei einer Delaminierung sich durch ein erhöhtes Energieabsorptionsvermögen auszeichnet. Weiterhin liegt die Aufgabe darin, ein Verfahren zum Herstellen dieses faserverstärkten mineralischen Baustoffs sowie eine Verwendung für die genannten Einsatzgebiete vorzuschlagen.

Die Aufgabe wird mit einem faserverstärktes mineralischen Baustoff mit den Merkmalen des Anspruch 1 sowie einem Verfahren nach Anspruch 10 gelöst. Rückbezogene Unteransprüche hierzu geben vorteilhafte Ausgestaltungen wieder.

Zur Verbundverbesserung von Fasern in einer Matrix und zur Erzielung einer Energie vernichtenden Duktiliät bei einer Belastungsinduzierten Auflösung des Stoffverbundes zwischen Matrix und Faser durch Delaminierungseffekte wird eine Modifikation der Faseroberfläche vorgeschlagen. Als Fasern dienen grundsätzlich die eingangs genannten Fasern und Faserprodukte wie Garne, Rovinge, Vliese, Matten, Geflechte, Gelege, Laminate, Gewebe, Gestricke oder Gewirke. Die Fasern selbst bestehen bevorzugt aus Glas, Kohlefaser, Aramid, Basalt, Polymer oder Metall.

Die Aufgabe wird durch einen faserverstärkten mineralischen Baustoff gelöst, bei dem mindestens eine Faser oder Faserbündel, vorzugsweise mindestens zwei sich kreuzende Fasern oder Faserbündel, weiter bevorzugt ein zwei- oder dreidimensionales Geflecht, Gewebe oder Textil aus den vorgenannten Fasern in dem mineralischen Baustoff als Matrix eingebettet ist. Der mineralische Baustoff ist vorzugsweise ein Putz, der als Putzschicht einzeln oder in einem Putzschichtsystem mit mehreren Einzelschichten auf ein Trägermaterial (Substrat) wie insbesondere ein Mauerwerk eines Hochbaus vorzugsweise eines Hauses oder einer Wand oder Mauer aufgetragen ist (Verwendung des mineralischen Baustoffs als Putz). Alle oder ein Teil der Fasern sind mit einer duktilen oder elastischen vorzugsweise thermoplastische Beschichtung vollständig oder teilweise ummantelt. Als Beschichtungsmaterial eignen sich vorzugsweise Harze oder Kunststoffe (Polymere) die thermisch und/oder chemisch aushärten, vorzugsweise Klebstoffe, Thermoplaste, Biopolymere oder Epoxidharze, weiter bevorzugt Vinylesterharze, Diallylphthalatharze, Methyl-Methacrylathharze, Phenol-Formaldehydharze, Aminoharze oder Polyurethanharze. Die Beschichtung weisen Dicken von 3 µm bis 5 mm auf, wobei 50 µm bis 400 µm bevorzugt sind, um die Biegsamkeit der Fasern zu erhalten. Die Flexibilität der Fasern ist insbesondere für die Verarbeitung und Herstellung von Endprodukte wie Rollenware entscheidend.

Vorzugsweise sind die Kreuzungsbereiche von zwei Fasern ummantelt, wobei sich die Beschichtungen an den Kreuzungen berühren und dabei eine bevorzugt stoffschlüssige Verbindung eingehen und dadurch verbesserte Verankerungseffekte durch Querfasern erzielen
Eine Ausführung sieht ein Geflecht vor, bei dem die Fasern in mindestens eine Raumrichtung unbeschichtet oder nur in Kreuzungsbereichen beschichtet sind, während sie in eine andere Richtung, d.h. in mindestens eine Raumrichtung beschichtet sind. Das Geflecht tritt dabei abhängig nach Raumrichtung unterschiedlich mit dem umgebenden Werkstoff in Wechselwirkung, womit einer bevorzugten Rissbildungsrichtung im mineralischen Baustoff und/oder dem darunter liegenden Trägermaterial durch die Armierung mit besonderem plastisch-elastischen Eigenschaftsprofil entgegen gewirkt werden kann. Somit ist man in der Lage ungünstige Rissfälle in Mauerwerk, Mörtel, Beton oder Erde präventiv zu begegnen und in der geeigneten Richtung Erhöhungen der Tragfähigkeit und Duktilität zu erzielen.

Ein wesentliches Merkmal umfasst die genannte Beschichtung der Fasern, in die stoffschlüssig Partikel eingebunden sind. Die Abmessungen der Partikel auf den Fasern weisen Partikelgrößen auf, die die Dicke der Beschichtung übersteigt, womit diese formschlüssig in den mineralischen Baustoff einragen, aber keine stoffschlüssige Verbindung mit dem mineralischen Baustoff eingehen. Bei axialer Belastung der Faser im mineralischen Baustoff (Matrix) neigen die Partikel zu Kippbewegungen und damit zu Verkantungen in der Beschichtung und damit zu einer intensivierten Verzahnung. Die Partikel werden dabei durch Formschluss im mineralischen Baustoff und zugleich durch die Beschichtung auf den Fasern geführt. Für eine bessere Verzahnung im mineralischen Baustoff weisen die Partikel Bruchkanten auf. Vorzugsweise kommen anorganische Partikel wie Sandstrahlgut aus Metall oder anorganischen nichtmetallische Werkstoffe (Gesteinskörnungen, Quarzsand, Keramik, Hartstoffe etc.) zum Einsatz. Eine gebrochene Partikeloberfläche mit scharfen Kanten verbessert eine formschlüssige Verzahnung zum mineralischen Baustoff einerseits und eine bessere stoffschlüssige Einbindung in die Beschichtung andererseits. Durch eine Auswahl der Korngrößenverteilung der Partikel z.B. durch Siebprozesse können die Partikelzusammensetzungen auf das entsprechende Faserprodukt angepasst werden, womit eine möglichst große und stabile Verzahnung der Partikel mit dem umgebenden Werkstoff sicherstellbar ist. Die Oberflächen der aus der Beschichtung herausragenden und in den mineralischen Baustoff hineinragenden Partikelbereiche sind beispielsweise vom Polymer benetzt. Die Partikelgrößen sind eine Systemeigenschaft und liegen zwischen 0,01 mm und 2 cm, wobei ein bevorzugter Bereich zwischen 0,05 mm bis 2 mm angestrebt wird. Die angestrebte und bevorzugte Rauheit der Oberfläche der beschichteten Faser besitzt maximale Profilhöhen (Rz,max) von 0,01 mm bis 20 mm, vorzugsweise zwischen 0,01 bis 5 mm, weiter bevorzugt zwischen 0,05 und 5 mm (Rauheit nach DIN EN ISO 4288 (Ausgabe 1998) bzw. mittlere Rauheiten (Ra) von 0,01 mm bis 4 mm in Abhängigkeit von der Partikeldichte bei Messungen nach dem Tastschnittverfahren in Anlehnung an VDI/VDE 2602 Blatt 2.

Übersteigen die Partikelgrößen nicht die Dicke der Beschichtung, was keinen Teil der Erfindung darstellt, kommt es zu keiner formschlüssigen Verbindung mit dem mineralischen Baustoff, sondern lediglich zu einer Veränderung der mechanischen Eigenschaften der Beschichtung. Allerdings kann es bei plastischer Verformung der Beschichtung in dieser zu einem Aneinanderreiben und Verdrängen von Partikeln und damit zu einem Verändern der Beschichtungsoberfläche kommen. Dies führt jedoch auch zu Verzahnungseffekten mit der Matrix, beruht aber primär auf einer Wechselwirkung der Partikel untereinander in der Beschichtung und damit auf einem abweichenden Mechanismus.

Die Partikel sind nicht zwingend in der gesamten Erstreckung der Beschichtung in diese eingebracht, sondern vorzugsweise nur in ausgewählten Bereichen, die sich weiter vorzugsweise auf einem überwiegenden Oberflächenanteil der Faser erstrecken.

Eine Ausführung sieht vor, die Fasern oder Faserbündel oder ein Geflecht nur in bevorzugt regelmäßigen Abständen zueinander mit Partikel zu versehen, während die dazwischen angeordneten Bereiche unbeschichtet sind oder deren Beschichtung partikellos ist. Die mit Partikeln versehenen Faserbereiche stellen Verankerungsbereiche für die Fasern dar, während die partikellosen Bereiche ohne die durch die Partikel hervorgerufene Verzahnung auskommen und im Falle einer Rissbildung in der Matrix eine Nachgiebigkeit aufweisen. Diese Nachgiebigkeit ermöglicht eine moderate axiale Bewegung der Fasern in der Matrix, wobei die Duktilität der Beschichtung bzw. die Reibung des mineralischen Baustoffs direkt auf der Faser und/oder der Beschichtung bei einer axialen Verschiebung der Faser Energie bzw. Reibungsenergie vernichtet. Die Bewegung entlang der Faser wird nach Blockierung der Schubdehnung des partikelfreien Bereichs durch die Verzahnungswirkung der Partikelbereichen gestoppt. Die in der Beschichtung eingebetteten Partikel können sich longitudinal oder radial auf der Faser bewegen, was einen dämpfenden Einfluss beim Auszug der Fasern aus der mineralischen Matrix ergibt und dadurch dynamische Zugkräfte abmindern kann.

Die Herstellung des vorgenannten faserverstärkten mineralischen Baustoffs umfasst die folgenden Verfahrensschritte: Bereitstellung mindestens eine Faser aus Polymer oder Metall, eines flüssigen oder fließfähigen Beschichtungsmaterials mit bzw. ohne Partikel, Aufbringen des Beschichtungsmaterials und der Partikel auf die Fasern sowie Aushärten des Beschichtungsmaterials auf den Fasern, wobei das Beschichtungsmaterial erstarrt, austrocknet oder verfilmt.

In einer bevorzugten Ausführung werden das Beschichtungsmaterial und die Partikel vor dem Aufbringen miteinander vermischt.

Das Beschichtungsmaterial umfasst in einer Ausführung ein Thermoplast, wird aufgrund einer erhöhten Temperatur oberhalb der Schmelz- oder Erweichungstemperatur flüssig oder fließfähig und erstarrt durch Abkühlen, wobei es aushärtet. Flüssig oder fließfähig bedeutet im Rahmen der Erfindung eine maximale Viskosität von 110000 mPas (Brookfield Spindel 4 / 1 RPM 23°C) gemessen nach DIN 53019 Teil 1 - 3. In vorteilhafter Weise sind mit diesem Polymersystem durch Abkühlung schnell aushärtende, aber auch wieder thermisch entfernbarer Beschichtungen mit ausgeprägten elastischen und plastischen Eigenschaften realisierbar.

Das Beschichtungsmaterial umfasst in einer weiteren Ausführung ein mehrkomponentiges Polymersystem, umfassend einen Binder und einen Härter, wobei der Härter durch vorhandene Stoffe in der Atmosphäre (z.B. Luftfeuchtigkeit) oder durch das Fasermaterial gebildet wird. In vorteilhafter Weise sind mit diesem Polymersystem schnell aushärtende Beschichtungen mit erhöhter Beständigkeit insbesondere auch bei erhöhten Temperaturen wie z.B. bei einem Gebäudebrand realisierbar. Zweikomponentenklebstoffe weisen zudem den Vorteil einer erhöhten stoff- und formschlüssigen Partikeleinbindung in die Beschichtung auf.

Das Beschichtungsmaterial umfasst in einer weiteren Ausführung ein mehrkomponentiges Polymersystem, umfassend ein Lösungsmittel als einen Binder und einen Härter, wobei die Beschichtung mit dem Entweichen der Lösungsmittelkomponente aushärtet (z.B. Lacke, Klebstoffe). Damit einher geht ein Schrumpfungsprozess, der eine zusätzliche Anbindung der Beschichtung um die Faser zusätzlich begünstigt.

Das Aufbringen des Beschichtungsmaterials auf die Fasern erfolgt vorzugsweise durch Imprägnieren (Eintauchen) in das flüssige oder fließfähige Beschichtungsmaterial oder - insbesondere im Falle einer selektiven Beschichtung der Faserbereiche - durch äußerliches Auftragen oder Aufsprühen auf die Fasern. Die Fasern sind ggf. zu grundieren.

Imprägnierungen haben den Vorteil, dass sie tief in ein Faserbündel eindringen und alle Fasern miteinander verkleben und sich untereinander duktil oder elastisch miteinander verbinden.

Äußerliche Anstriche verkleben hingegen nur die außen liegenden Filamente und aktivieren bei Belastung nicht das gesamte Faserbündel. Damit werden außenliegend exponierte Fasern bei einer Belastung zunächst stärker belastet, während die inneren Fasern eines Bündels erst nach einem Versagen belastet werden. Es kommt zu einer seriellen Belastung und ggf. einem seriellen Versagen der Fasern eines Faserbündels.

Andere Beschichtungen stellen in Kunststoff gehüllte Faserverbundwerkstoffe dar. Diese können vorzugsweise als Faserhalbzeuge, Prepregs oder Formmassenprodukte hergestellt werden, die auch erst nach einer Beschichtung zu einem der vorgenannten Faserprodukte (Faserbündel, Gewebe etc.) weiterverarbeitet werden können.

Das Aufbringen der Partikel auf die Fasern erfolgt entweder durch Auftragen (Einblasen, Einstreuen oder Einstäuben) auf die noch nicht ausgehärtete Beschichtung oder durch Einlegen der frisch beschichteten Fasern in eine Partikelschüttung. Vorzugsweise für Ausführungsformen, in denen die Oberflächen der Partikel, die aus der Beschichtung herausragen, mit dem Beschichtungsmaterial beschichtet werden, werden die Partikel vorzugsweise in das flüssige oder fließfähige Beschichtungsmaterial eingemischt und gemeinsam mit der Beschichtung nach einem der vorgenannten Verfahrensschritte aufgetragen.

Es liegt im Rahmen der Erfindung, die Fasern nicht separat oder individuell zu beschichten und mit Partikeln zu versehen, sondern auch die vorgenannten Faserprodukte wie Garne, Rovinge, Vliese, Matten, Geflechte, Gelege, Laminate, Gewebe, Gestricke oder Gewirke nach deren Herstellung zum Faserprodukt oder Faserzwischenprodukt insgesamt oder bereichsweise zu beschichten und insgesamt oder bereichsweise (z.B. punktuell, streifenweise oder kreuzweise in bestimmter Ausrichtung) mit Partikel zu versehen. Auf flächigen Faserprodukten werden die Partikel beidseitig oder nur einseitig vorgesehen, wobei einseitig aufgebrachte Partikel in vorteilhafter Weise Produktionsschritte zur Herstellung insbesondere flächiger Faserprodukte vereinfacht oder einspart. Des Weiteren ist es dadurch möglich die Schubbelastungen in bestimmte Richtungen weiterzuleiten.

Anwendungsbereiche, d.h. Verwendungen des faserverstärkten mineralischen Baustoffs sind insbesondere:
- Mörtel (Mörtelarmierungen)
- Putz (Putzarmierungen, Faserputz)
- Beton (Faserbeton, mineralische Faserplatten)
- Erde (Geotextilien, Armierungen für Lehmbauteile)

Der faserverstärkte mineralische Baustoff und das Verfahren zu dessen Herstellung werden im Folgenden anhand von Ausführungsbeispielen mit Figuren näher erläutert. Es zeigen

**Fig.1** eine nicht erfindungsgemäße prinzipielle perspektivische Darstellung einer Einzelfaser mit Beschichtung und darin eingebundenen Partikeln,

**Fig.2a** und 2b zeigen jeweils nicht erfindungsgemäße Ausführungsformen, und Fig.2c zeigt eine erfindungsgemäße Ausführungsform in Schnittdarstellung einer Einzelfaser sowie

**Fig.3a** **bis c** Diagramme von Pull-Out-Zugversuchen an Einzelfasern aus einer Matrix aus Kalkzementputz.

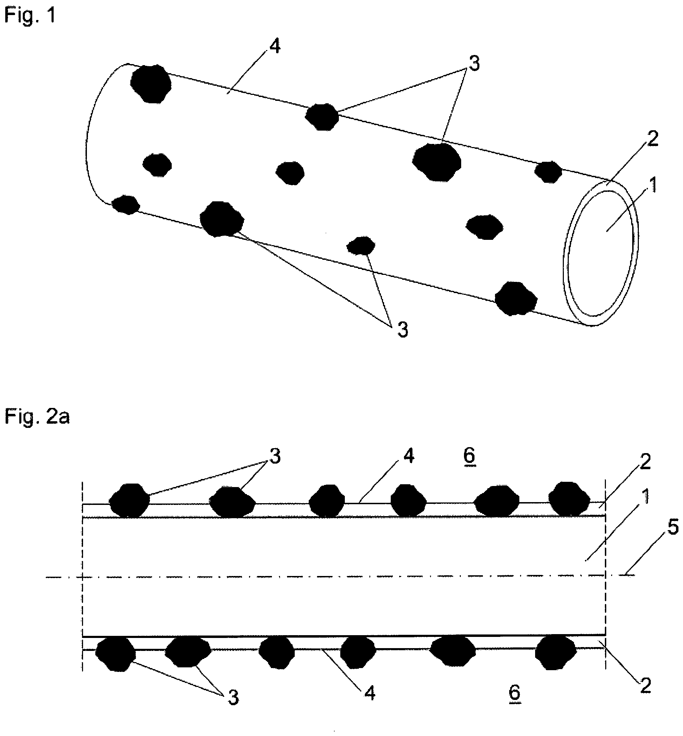

Zentrale Elemente des faserverstärkten mineralischen Baustoffs sind die darin eingebetteten Fasern. Alle oder ein Teil dieser Fasern sind - wie beispielhaft an einer Faser **1** in **Fig.1** dargestellt - mit einer duktilen und/oder elastischen Beschichtung **2** versehen, in die stoffschlüssig Partikel **3** eingebunden sind, die durch die äußere Mantelfläche **4** der Beschichtung hinausragen.

Bei der nicht erfindungsgemäßen, in **Fig.1** dargestellten beschichteten Faser unterscheidet man unterschiedliche Ausführungsformen, von denen beispielhaft drei Grundausführungen in den **Fig.2a** **bis c** (Schnittdarstellungen längs der Symmetrieachse **5** der Faser) wiedergegeben sind.

**Fig.2a** zeigt eine nicht erfindungsgemäße Ausführung, bei denen die Partikel **3** stoffschlüssig in die Beschichtung eingesetzt sind, dabei die Beschichtung vollständig durchdringen und dabei vorzugsweise, aber nicht zwingend einen unmittelbaren Kontakt zur Faser **1** aufweisen. Die aus der äußeren Mantelfläche **4** der Beschichtung hinausragenden Partikelbereiche sind nicht mit Beschichtungsmaterial beschichtet. Für eine Vermeidung eines stoffschlüssigen Verbundes der Partikel mit dem umgebenden mineralischen Baustoff **6,** sind die Partikel für eine nicht dargestellte erfindungsgemäße Ausführungsform der Fig.2a mit einem Trennmittel benetzt, und umfassen einen Beschichtungsüberzug.

Diese Bauform zeichnet sich dadurch aus, dass die Partikel sich bei einer Relativbewegung zwischen Faser und umgebenden mineralischen Baustoff moderat drehen und zumindest ein Teil dieser Fasern beim Drehen unmittelbar in die Faser eingedrückt werden. An diesen eingedrückten Kontaktflächen entsteht in der Faser eine Spannungssingularität, die nur durch die plastischen und/oder elastischen Eigenschaften der Faser aufgefangen wird. Wird die Faser weiter axial bewegt, kommt es je nach Auslegung der Fasereinbindung im mineralischen Baustoff bereits nach geringen Wegen entweder zu einem Ausbrechen der Partikel im mineralischen Baustoff, zu einer Lösung der Partikel aus der Beschichtung zu einer Beschädigung der Faser durch die Partikel oder zu einem Faserbruch. Der unmittelbare Kontakt der Partikel mit dem mineralischen Baustoff und Faser begünstigt eine unmittelbar mit der axialen Faserbewegung einhergehenden sofortigen irreversiblen Schädigung, weswegen sich diese Bauform insbesondere als Verfestigungsmechanismen gegen einsetzende Rissbildung und/oder bei feinen Rissen und/ oder ausgeprägter Rissverzweigung besonders eignet. Größere Rissbreiten werden aufgrund der fortgeschrittenen Faserschädigung allenfalls nur noch in geringerem Maße überbrückt.

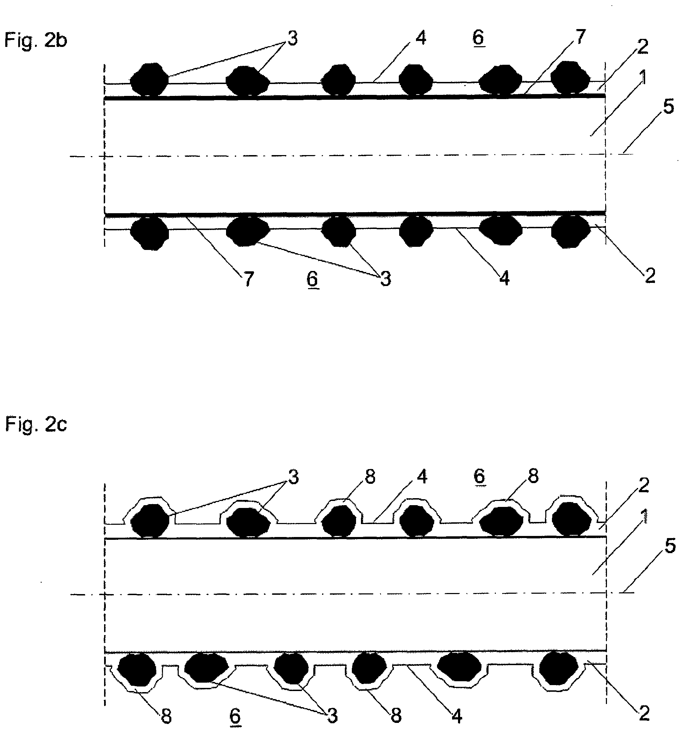

**Fig.2b** zeigt eine nicht erfindungsgemäße Ausführung, bei denen die Partikel **3** stoffschlüssig in die Beschichtung **2** eingesetzt sind, dabei die Beschichtung überwiegend oder insgesamt nicht vollständig durchdringen, d.h. die Faser **1** nicht berühren. Um jeglichen direkten Kontakt der Partikel und unbelasteter Faser zu vermeiden, ist vorzugsweise unmittelbar um die Faser eine (oder mehrere) partikelfreie vorzugsweise elastische Zwischenschicht **7** aufgebracht. Die aus der äußeren Mantelfläche **4** der Beschichtung hinausragenden Partikelbereiche sind nicht mit Beschichtungsmaterial beschichtet und werden wie zuvor anhand von **Fig.2a** beschrieben in den mineralischen Baustoff bevorzugt formschlüssig eingebunden. Bei axialer Belastung der Faser kommt es zu einer zuvor beschriebenen Relativbewegung zwischen Faser **1** mit Zwischenschicht **7** und mineralischen Baustoff **6.** Dabei verkanten sich die Partikel ebenso in vorgenannter Weise, jedoch verhindert die Beschichtung einen unmittelbaren Kontakt zwischen Faser und Partikel und damit einer unmittelbar mit einer axialen Bewegung der Faser im mineralischen Baustoff einsetzenden Schädigung der Faser. Folglich sind gegenüber der vorgenannten Ausführung auch größere Rissbreiten ohne eine Beschädigung der diese überbrückenden Fasern möglich.

**Fig.2c** zeigt eine erfindungsgemäße Ausführung, bei denen die Partikel **3** stoffschlüssig in die Beschichtung **2** eingesetzt sind und von dieser auch vollständig eingebunden sind. Die aus der Beschichtung hinausragenden Partikelbereiche sind abweichend zu den in **Fig.2a** **und b** dargestellten Ausführungen unter Bildung von Partikelkappen **8** ebenfalls mit Beschichtungsmaterial beschichtet und werden mit diesem wie zuvor beschrieben in den mineralischen Baustoff formschlüssig eingebunden. Vorzugsweise entspricht diese Ausführung der in **Fig.2a** offenbarten Version, bei der zusätzlich eine optional separate partikelfreie Deckschicht vorgesehen ist. Die Partikelkappen dienen als elastischer und / oder plastischer Puffer zwischen den Partikeln und dem umgebenden mineralischen Baustoff und vermeiden deren direkten Kontakt. Sie vermeiden damit eine unmittelbar mit einer Faserbelastung einsetzenden Zerrüttung (mechanische Degradation, Materialermüdung) des angrenzenden mineralischen Baustoffs insbesondere auch vor einer Rissbildung. Ein mineralischer Baustoff weist im Gegensatz zu dem Fasermaterial ein sprödes Materialverhalten und eine grundsätzlich ausgeprägte Neigung zur Ermüdung auf. Eine mit Partikelkappen modifizierte Faserverstärkung reduziert die Spannungsspitzen im Bereich der formschlüssig eingebundenen Partikel und degradiert insbesondere bei wechselnder Belastung nicht oder nur signifikant langsamer die mechanischen Eigenschaften durch Ermüdung. Grundsätzlich ist diese Ausführung zusätzlich mit mindestens einer Zwischenschicht gem. **Fig.2a** kombinierbar, die insbesondere bei der vorgenannten wechselnden Belastung neben einer zusätzlichen Systemelastizität auch einen Schutz der Faser vor ggf. einsetzender Reibung zwischen Faser und Partikeln sicherstellt.

Für die Anwendung als Armierung in mineralischen Mörteln als mineralischen Baustoff, die nach dem Bruch große Verformungen bei hohem Lastniveau aufweisen sollen, eignen sich als Beschichtungsmaterial vor allem weichere Klebstoffe wie Polyurethanklebstoffe die die Partikel leicht verformbar einbindet. Das Beschichtungsmaterial ist in diesem Fall so verformbar, das die Partikel zu der Faser relative Schubverformungen von bis zu 1 mm erfahren können. Die Fasern sind dann im mineralischen Baustoff je nach der vorgenannten Ausführungsform bevorzugt ca. 0,1 mm bis 1 mm axial verschiebbar. Dadurch werden mit der axialen Verschiebung der Faser eine längere Verbundlänge der Faser und somit auch eine höhere Mantel- und Verankerungsfläche der Faser aktiviert, die die Schubspannungen verteilt und mögliche Schubspannungsspitzen reduziert. Durch den Hydratisierungsprozess des Zements und des Kalks im mineralischen Baustoff wachsen die CSH-Phasen in die bevorzugt raue (bevorzugt gebrochene) Oberfläche der Partikel und verzahnen sich somit mit der Faser formschlüssig so dass der Verbund hergestellt ist. Für hochfeste und steife Anbindungen z.B. bei hochfesten Betonen eignen sich härtere und hochfeste Klebstoffe wie Epoxidharze oder Epoxidharzgrundierungen, die mit Zugfestigkeiten von mindestens 4 N/mm² die Körnung besser in der Klebstoffschicht halten. Dadurch wurden in Versuchen auch höhere Kräfte bei spröderem Versagen erzielt.

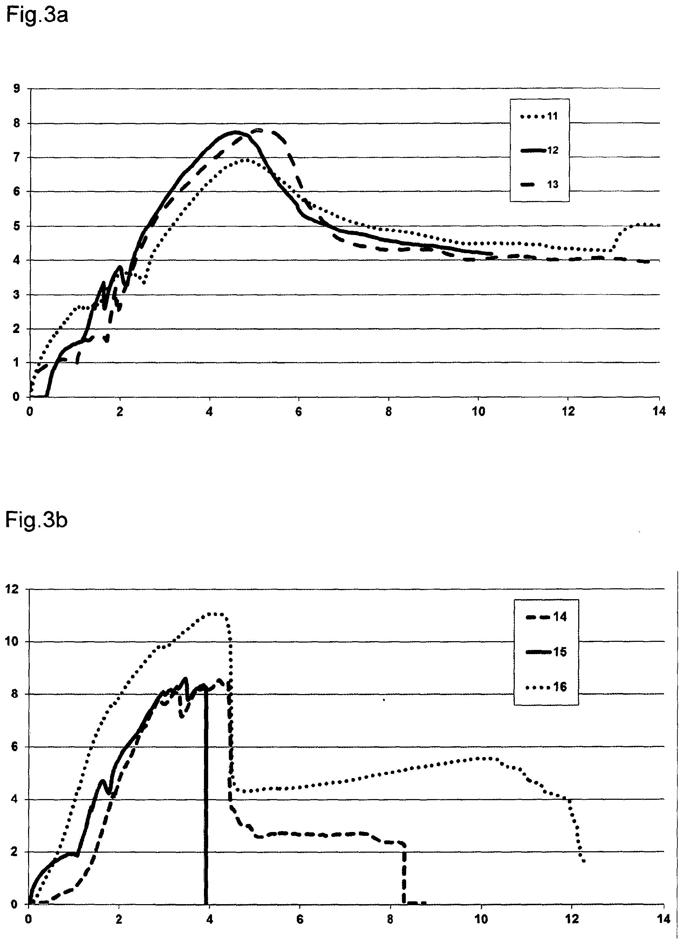

**Fig.3a** **bis c** geben in Diagrammen sog. Pull-Out-Zugversuche (Faserauszugversuche) wieder, bei denen jeweils vier Einzelfasern aus Kalkzementputz gezogen wurden. Die Zugkraft **9** in kN ist jeweils über den Verfahrweg **10** in mm wiedergegeben. Die Zugversuche repräsentieren eine empirische Vorgehensweise einer Findung von geeigneten Beschichtungsmaterialien für eine Ausführungsform gem. **Fig.2a****,** wobei im Beispiel eine Einzelfaser mit zwei verschiedenen Klebstoffe als Beschichtungsmaterialien sowie Partikel mit zwei Körnungen gewählt wurden.

Als Klebstoff diente eine Epoxidharzgrundierung (als steifer Klebstoff, mit einer Zugfestigkeit von 6 N/mm² und einem E-Modul von 5000 N/mm² bei Zugbelastung)und ein Polyurethanklebstoff (weicher Klebstoff, mit Bruchdehnungen größer 20 %). Als Partikel dienten eine Sandstrahlgutkörnung mit feinem Quarzsand (Dichte 2,65 kg/m³), und Metallpartikel (Dichte 7,4 kg/m³), die als Abfallprodukte anfallen mit einem maximalen Korndurchmesser von 0,1 mm und ein gröberer Quarzsand mit maximalem Korndurchmesser von 1 mm. Der Quarzsand enthält einen reinen mineralischen Quarzanteil von über 85%, dessen Mohshärte 7 beträgt und somit gut zur Verzahnung gegenüber mineralischen Baustoffen geeignet ist. Die Auszugversuche erfolgten an einem Kalkzement-Mörtel als Matrixmaterial.

**Fig.3a** gibt die Zugversuche mit Polyurethanklebstoff und beiden Körnungen wieder (Polyurethanklebstoff mit kleiner Körnung **11,** Polyurethanklebstoff mit grober Körnung einseitig **12,** Polyurethanklebstoff mit grober Körnung beidseitig **13**). Bei dem weichen Klebstoff handelte es sich um einen wasserbasierenden Polyurethanklebstoff mit einer Viskosität von 110000 mPas (Brookfield Spindel 4 / 1 RPM 23°C), einem Feststoffgehalt von 39, % bei einem pH-Wert von 8,8. Auszugversuche ergaben bei dem weichen Klebstoff wesentlich reproduzierbarere Ergebnisse, die unabhängig von der Partikelgröße ein hohes Verformungsvermögen aufwiesen. Bei der Applikation der partikelhaltigen Beschichtung einseitig und beidseitig zeigten sich keine großen Unterschiede bei Verwendung des weichen Klebstoffs.

**Fig.3b** gibt die gleichen Zugversuche jedoch mit Epoxidharzgrundierung und beiden Körnungen wieder (Epoxidharzgrundierung mit kleiner Körnung beidseitig **14,** Epoxidharzgrundierung mit grober Körnung einseitig **15,** Epoxidharzgrundierung mit grober Körnung beidseitig **16**). Der steife Klebstoff zeigte bei allen Körnungen höhere Kraftwerte als bei dem vorgenannten weichen Klebstoff, zeigte aber zugleich ein sprödes Versagen in der die Faser umgebenden Mörtelmatrix. Eine beidseitig grobe Körnung führte zu einer signifikant höheren Zugfestigkeit als eine kleine Körnung und/oder eine einseitige Körnung.

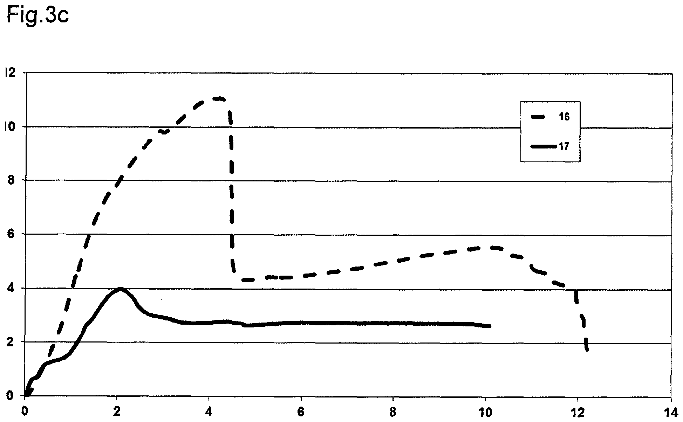

**Fig.3c** zeigt einen Vergleichszugversuch zwischen einer beschichteten Faser mit Epoxidharzgrundierung ohne Partikel **17** und einer beschichteten Faser mit Epoxidharzgrundierung mit grober Körnung beidseitig **16** (vgl. **Fig.2b**). Im Vergleich zur Probe ohne Partikelbeschichtung wurden durch die Partikel ca. 2,5 mal so große Kraftspitzenwerte erreicht.

### Bezugszeichenliste:

- 1: Faser
- 2: Beschichtung
- 3: Partikel
- 4: äußere Mantelfläche
- 5: Symmetrieachse
- 6: Umgebender mineralischer Baustoff
- 7: Zwischenschicht
- 8: Partikelkappe
- 9: Zugkraft
- 10: Verfahrweg
- 11: Polyurethanklebstoff mit kleiner Körnung
- 12: Polyurethanklebstoff mit grober Körnung einseitig
- 13: Polyurethanklebstoff mit grober Körnung beidseitig
- 14: Epoxidharzgrundierung mit kleiner Körnung
- 15: Epoxidharzgrundierung mit grober Körnung einseitig
- 16: Epoxidharzgrundierung mit grober Körnung beidseitig
- 17: Epoxidharzgrundierung ohne Partikel

## Patentansprüche

1. Faserverstärkter mineralischer Baustoff, umfassend
a) mindestens eine Faser **(1),** die in den mineralischen Baustoff **(6)** eingebettet ist,
b) mindestens eine duktile oder elastische Beschichtung **(2, 7)** auf der Faser,
c) in die Beschichtung stoffschlüssig eingebundene Partikel **(3),** wobei die Partikel formschlüssig in den mineralischen Baustoff einragen,
wobei
d) die Abmessungen der Partikel .auf einem überwiegenden Oberflächenanteil der Faser die Dicke der Beschichtung übersteigt,
**dadurch gekennzeichnet, dass** die Partikel
e) von der Beschichtung unter Bildung von Partikelkappen (8) auch vollständig eingebunden sind oder
f) mit einem Trennmittel benetzt sind und einen Beschichtungsüberzug umfassen.

2. Faserverstärkter mineralischer Baustoff nach Anspruch 1, **dadurch gekennzeichnet, dass** mindestens zwei Fasern **(1)** vorgesehen sind, die sich mindestens einmal kreuzen, wobei sich die Beschichtungen an den Kreuzungen berühren.

3. Faserverstärkter mineralischer Baustoff nach Anspruch 1 oder 3, **dadurch gekennzeichnet, dass** eine Vielzahl von Fasern **(1)** vorgesehen sind, die sich in mindestens zwei Raumrichtungen orientieren und ein Gewebe bilden.

4. Faserverstärkter mineralischer Baustoff nach Anspruch 4, **dadurch gekennzeichnet, dass** die Fasern in mindestens eine Raumrichtung unbeschichtet und in mindestens eine Raumrichtung beschichtet sind.

5. Faserverstärkter mineralischer Baustoff nach einem der vorgenannten Ansprüche, **dadurch gekennzeichnet, dass** die Beschichtung **(2, 7)** aus einem oder mehreren Polymeren mit jeweils einer Schichtdicke von 3 µm bis 5 mm besteht.

6. Faserverstärkter mineralischer Baustoff nach einem der vorgenannten Ansprüche, **dadurch gekennzeichnet, dass** die Beschichtung **(2, 7)** aus einem Epoxidharz, einem Vinylesterharz oder einem Polyurethan bestehen.

7. Faserverstärkter mineralischer Baustoff nach einem der vorgenannten Ansprüche, **dadurch gekennzeichnet, dass** die Partikel **(3)** Quarzsand oder Sandstrahlgut umfassen.

8. Faserverstärkter mineralischer Baustoff nach einem der vorgenannten Ansprüche, **dadurch gekennzeichnet, dass** die Partikel **(3)** aus unterschiedlichen Sieblinienzusammensetzungen bestehen können.

9. Faserverstärkter mineralischer Baustoff nach einem der vorgenannten Ansprüche, **dadurch gekennzeichnet, dass** die Partikel **(3)** Bruchkanten aufweisen.

10. Verfahren zum Herstellen eines faserverstärkten mineralischen Baustoffs nach einem der Ansprüche 1 bis 9, umfassend die folgenden Verfahrensschritte:
a) Bereitstellung mindestens einer Faser **(1),** eines flüssigen oder nicht ausgehärteten Beschichtungsmaterials sowie von Partikeln **(3),**
b) Aufbringen des Beschichtungsmaterials und der Partikel auf die Fasern, wobei die Partikel zeitgleich mit dem oder im Anschluss an das Beschichtungsmaterial aufgebracht werden,
c) Aushärtung des Beschichtungsmaterials auf den Fasern, wobei das Beschichtungsmaterial erstarrt und eine Beschichtung (2,7) bildet,
d) Einbettung der Fasern in den mineralischen Baustoff, wobei die Partikel formschlüssig in den mineralischen Baustoff einragen,
wobei
e) die Abmessungen der Partikel auf einem überwiegenden Oberflächenanteil der Faser die Dicke der Beschichtung übersteigt und
**dadurch gekennzeichnet, dass** die Partikel
f) von der Beschichtung unter Bildung von Partikelkappen **(8)** auch vollständig eingebunden werden oder
g) mit einem Trennmittel benetzt sind und einen Beschichtungsüberzug umfassen.

## Claims

1. Fiber enforced mineral construction material, comprising:
a) at least one fiber (1), which is embedded in a mineral construction material (6)
b) at least one ductile or elastic coating (2,7) on the fiber
c) particles (3) positively bonded into the coating, wherein the particles protrude form-fittingly into the mineral construction material, wherein
d) the measures of the particles exceed the thickness of the coating on a predominant part of the surface of the fiber
**characterized in that** the particles
e) are also completely embedded into the coating under formation of particle caps (8) or
f) are wetted with a separating agent and comprise a coating material.

2. Fiber enforced mineral construction material according to claim 1, **characterized in that** at least two fibers (1) are intended which at least once cross wherein the coatings touch at the crossings.

3. Fiber enforced mineral construction material according to claim 1 or 3, **characterized in that** a plurality of fibers (1) are intended which orientate towards at least two spatial directions and form a fabric.

4. Fiber enforced mineral construction material according to claim 4, **characterized in that** the fibers are uncoated in at least one spatial direction and are coated in at least one spatial direction.

5. Fiber enforced mineral construction material according to any one of the aforementioned claims, **characterized in that** the coating (2, 7) consists of one or more polymers each with a layer thickness of 3 µm to 5 mm.

6. Fiber enforced mineral construction material according to any one of the aforementioned claims, **characterized in that** the coating (2, 7) consists of an epoxy resin, a vinylester resin or a polyurethane.

7. Fiber enforced mineral construction material according to any one of the aforementioned claims, **characterized in that** the particles (3) comprise quartz sand or sandblast material.

8. Fiber enforced mineral construction material according to any one of the aforementioned claims, **characterized in that** the particles (3) consist of a composition of different particle-size distribution curves.

9. Fiber enforced mineral construction material according to any one of the aforementioned claims, **characterized in that** the particles (3) have a breakline.

10. Method for producing a fiber enforced mineral construction material according to any one of claims 1 to 9, comprising the following processing steps:
a) Provision of a least one fiber (1), one liquid or not cured coating material as well as particles (3),
b) Application of the coating material and the particles on the fibers, wherein the particles are applied simultaneously or subsequently to the coating material.
c) Curing of the coating material on the fibers, wherein the coating material solidifies and forms a coating (2,7)
d) Embedding of the fibers into the mineral construction material, wherein the particles protrude form fittingly into the mineral construction material
wherein
e) the measures of the particles exceed the thickness of the coating on a predominant part of the surface
**characterized in that** the particles
f) are completely embedded into the coating under formation of particle caps (8) or
g) are wetted with a separating agent and comprise a coating material.

## Revendications

1. Matériau de construction minéral renforcé par des fibres comprenant :
a) au moins une fibre (1), qui est incorporée dans le matériau de construction minéral (6),
b) au moins un revêtement ductile ou élastique (2, 7) situé sur la fibre,
c) des particules (3) intégrées dans le revêtement par une liaison par la matière, les particules pénétrant dans le matériau de construction minéral par une liaison par la forme,
d) les dimensions des particules dépassant l'épaisseur du revêtement sur la plus grande partie de la surface de la fibre,
**caractérisé en ce que**
les particules :
e) sont également totalement intégrées dans le revêtement en formant des capuchons de particules (8), ou
f) sont mouillées avec un agent de séparation et comportent une couche de revêtement.

2. Matériau de construction minéral renforcé par des fibres conforme à la revendication 1,
**caractérisé en ce qu'**
il est prévu au moins deux fibres (1) qui se croisent au moins une fois, les revêtements venant en contact au niveau des croissements.

3. Matériau de construction minéral renforcé par des fibres conforme à la revendication 1 ou 2,
**caractérisé en ce qu'**
il est prévu un ensemble de fibres (1) qui sont orientées dans au moins deux directions spatiales et forment un tissu.

4. Matériau de construction minéral renforcé par des fibres conforme à la revendication 4,
**caractérisé en ce que**
les fibres ne sont pas revêtues dans au moins une direction spatiale et sont revêtues dans au moins une direction spatiale.

5. Matériau de construction minéral renforcé par des fibres conforme à l'une des revendications précédentes,
**caractérisé en ce que**
le revêtement (2, 7) est constitué par un ou plusieurs polymère(s) ayant chacun une épaisseur de couche de 3 µm à 5 mm.

6. Matériau de construction minéral renforcé par des fibres conforme à l'une des revendications précédentes,
**caractérisé en ce que**
le revêtement (2, 7) est constitué par une résine époxy, une résine d'ester vinylique ou un polyuréthane.

7. Matériau de construction minéral renforcé par des fibres conforme à l'une des revendications précédentes,
**caractérisé en ce que**
les particules (3) renferment du sable quartique ou un produit de sablage.

8. Matériau de construction minéral renforcé par des fibres conforme à l'une des revendications précédentes,
**caractérisé en ce que**
les particules (3) peuvent avoir des courbes granulométriques différentes.

9. Matériau de construction minéral renforcé par des fibres conforme à l'une des revendications précédentes,
**caractérisé en ce que**
les particules (3) ont des arêtes de rupture.

10. Procédé d'obtention d'un matériau de construction minéral renforcé par des fibres conforme à l'une des revendications 1 à 9,
comprenant les étapes suivantes consistant à :
a) se procurer au moins une fibre (1), un matériau de revêtement liquide ou non durci ainsi que des particules (3),
b) appliquer le matériau de revêtement et les particules sur les fibres, les particules étant appliquées simultanément au matériau de revêtement ou à la suite de celui-ci,
c) durcir le matériau de revêtement sur les fibres, le matériau de revêtement se solidifiant et formant un revêtement (2, 7),
d) incorporer les fibres dans le matériau de construction minéral, les particules pénétrant par une liaison par la forme dans le matériau de construction minéral,
e) les dimensions des particules dépassant l'épaisseur du revêtement sur la plus grande partie des fibres,
**caractérisé en ce que**
les particules,
f) sont également totalement intégrées dans le revêtement en formant des capuchons de particules (8), ou
g) sont mouillées avec un agent de séparation et comportent une couche de revêtement.
